# EUROPEAN PATENT APPLICATION

(11) **EP 4 180 202 A1**
(43) Date of publication of application: **17.05.2023**
(21) Application number: 21898293.2
(22) Date of filing: 02.09.2021
(51) Int. Cl.: B29C 43/36, B29L 31/00

(54) **FORMING APPARATUS FOR POUCH**

(30) Priority: 30.11.2020 KR 20200164148
(71) Applicant: LG Energy Solution, Ltd., Seoul 07335 (KR)
(72) Inventor: PARK, Sung Chul, Daejeon 34122 (KR); KIM, Sangwook, Daejeon 34122 (KR); PARK, Sin Young, Daejeon 34122 (KR); PARK, Dong Hyeuk, Daejeon 34122 (KR); LEE, Chung Hee, Daejeon 34122 (KR)
(74) Representative: Plasseraud IP
(86) International application number: PCT/KR2021/011810
(87) International publication number: WO 2022/114466

(57) **Abstract**

A pouch forming apparatus according to an embodiment of the present disclosure includes a die unit in which a forming groove is formed in a portion where a pouch film is disposed, a partition plate that divides the forming groove into at least two, and a pressing unit that presses the pouch film disposed on the die unit to form an electrode assembly-receiving part, wherein a chamfer part is formed at the lower end part of the partition plate.

## Description

### [TECHNICAL FIELD]

### Cross Citation with Related Application(s)

This application claims the benefit of Korean Patent Application No. 10-2020-0164148 filed on November 30, 2020 with the Korean Intellectual Property Office, the disclosure of which is incorporated herein by reference in its entirety.

The present disclosure relates to a pouch forming apparatus, and more particularly, to a pouch forming apparatus having improved durability.

### [BACKGROUND]

As the demands for portable electronic products such as notebooks, video cameras and cellular phones are rapidly increased in these days, and development of electric vehicles, energy storage batteries, robots, satellites, etc. is under active progress, numerous studies are being made on secondary batteries being used as the driving power source.

The electrode assembly mounted in the battery case is a power generating element, having a positive electrode/separator/negative electrode stack structure, which can be charged and discharged, and the electrode assembly is classified into a jelly-roll type, a stacked type and a stacked/folded type. The jelly-roll type electrode assembly is configured to have a structure in which a long sheet type positive electrode and a long sheet type negative electrode, to which active materials are applied, are wound in a state where a separator is interposed between the positive electrode and the negative electrode, the stacked type electrode assembly is configured to have a structure in which a large number of positive electrodes having a predetermined size and a large number of negative electrodes having a predetermined size are sequentially stacked in a state in which separators are interposed between the positive electrodes and the negative electrodes, and the stacked/folded type electrode assembly is a combination of the jelly-roll type electrode assembly and the stacked type electrode assembly. Among them, the jelly-roll type electrode assembly has advantages in that manufacturing is easy and an energy density per unit weight is high.

Meanwhile, based on the shape of a battery case, a secondary battery is classified into a cylindrical battery where an electrode assembly is built into a cylindrical metal can, a prismatic battery where an electrode assembly is built into a prismatic metal can, and a pouch-type battery where an electrode assembly is built into a pouch type case formed of an aluminum laminate sheet.

A pouch-type secondary battery includes an electrode assembly in which an electrode and a separator are alternately laminated, and a pouch case for housing the electrode assembly. The method for manufacturing the secondary battery includes an electrode production step of producing an electrode, an electrode assembly production step of alternately laminating electrodes and a separator to produce an electrode assembly, an electrode lead coupling step of coupling electrode lead to the electrode assembly, and a pouch sealing step of housing the electrode assembly in a pouch case in a state where the tip of the electrode lead is pulled out to the outside, and sealing the edge surface of the pouch case.

Here, the pouch case is manufactured using a pouch forming apparatus, and the pouch forming apparatus includes a die unit in which a pouch film is disposed and a forming groove is formed, and a pressing unit in which the pouch film is inserted into the forming groove in a state where the pouch film disposed on the die unit is pressed, thereby forming an electrode assembly-receiving part. Here, the forming groove is provided with a partition plate, and the partition plate divides the forming groove into two. Additionally, the pressing unit is formed with a pair of pressing parts that are respectively inserted into the forming grooves divided based on the partition plate.

The pouch forming apparatus has a problem that pressure is also applied to the central part of the pouch film located between the pair of pressing parts, wherein the pressure applied to the central part of the pouch film is transferred to the partition plate as it is, the partition plate is damaged or deformed.

### [Prior Art Literature]

### [Patent Literature]

Korean Unexamined Patent Publication No. 2013-0132093

### [DETAILED DESCRIPTION OF THE INVENTION]

### [Technical Problem]

It is an object of the present disclosure to provide a pouch forming apparatus having improved durability.

However, the problem to be solved by embodiments of the present disclosure is not limited to the above-described problems, and can be variously expanded within the scope of the technical idea included in the present disclosure.

### [Technical Solution]

According to an embodiment of the present disclosure, there is provided a pouch forming apparatus comprising: a die unit in which a forming groove is formed in a portion where a pouch film is disposed, a partition plate that divides the forming groove into at least two, and a pressing unit that presses the pouch film disposed on the die unit to form an electrode assembly-receiving part, wherein a chamfer part is formed at the lower end part of the partition plate.

The lower end part of the partition plate may be connected to the die unit, and the chamfer part may be formed at a portion where the die unit and the partition plate are connected.

The partition plate and the die unit may be integrally formed.

The partition plate may be connected to both wall surfaces of the forming groove.

The pouch forming apparatus may further comprise a blank holder located between the pressing unit and the die unit.

The blank holder may fix the pouch film to the upper end part of the die unit.

The blank holder may comprise a protrusion part that abuts on a connecting part between the partition plate and the die unit.

An end part of the protrusion part of the blank holder may have a structure inclined so as to correspond to the chamfer part formed at the lower end part of the partition plate.

The blank holder may comprise a first blank holder and a second blank holder formed on the left side and the right side of the lower end part of the partition plate, respectively.

The chamfer part of the partition plate may comprise a first chamfer part that abuts on the first blank holder and a second chamfer part that abuts on the second blank holder.

### [Advantageous Effects]

According to embodiments of the present disclosure, a chamfer part can be formed at the connecting part between the die unit and the partition plate for dividing the forming groove, thereby reducing cracks caused by shaking of the partition plate and colliding with surrounding components.

In addition, a chamfer part can be formed on the component corresponding to the chamfer part of the partition plate, thereby further securing the allowable depth for pouch forming, and stably securing the actual forming depth.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is an exploded perspective view showing a pouch type battery cell;
Fig. 2 is a view showing a pouch forming apparatus according to an embodiment of the present disclosure;
Fig. 3 is a perspective view showing a die unit before movement of the pressing unit of the pouch forming apparatus of Fig. 2;
Fig. 4 is a partial cross-sectional view taken along the line A-A of Fig. 3; and
Fig. 5 is a partial cross-sectional view according to the comparative example of Fig. 4.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of parts not related to the description will be omitted herein for clarity, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

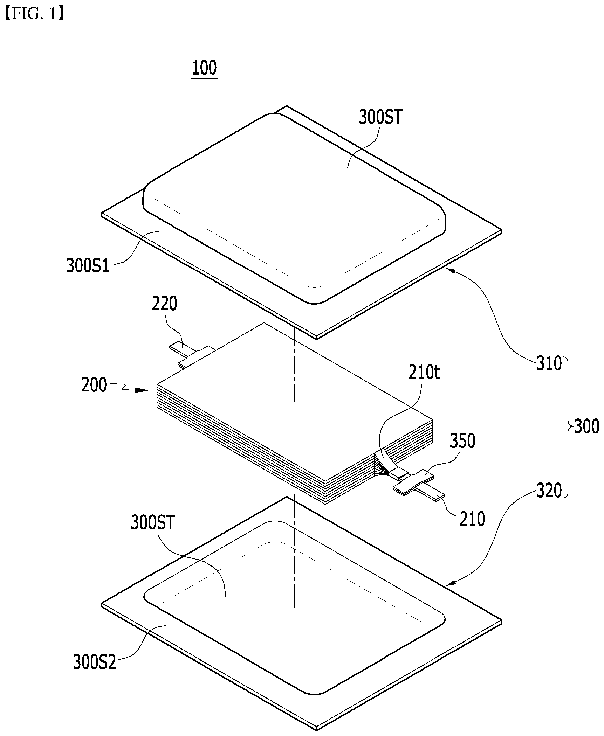

Fig. 1 is an exploded perspective view showing a pouch type battery cell.

Referring to Fig. 1, the pouch-type battery cell 100 may be manufactured by housing the electrode assembly 200 inside the cell case 300 and then sealing the case. The electrode assembly 200 may include a positive electrode, a negative electrode, and a separator disposed between the positive electrode and the negative electrode. The electrode assembly 200 may be a stack type electrode assembly, a jelly-roll type electrode assembly, or a stack/folding type electrode assembly.

Each of the positive electrode and the negative electrode includes an electrode tab 210t, and the electrode leads 210 and 220 each connected to the electrode tab 210t may be exposed to the outside of the cell case 300. The electrode tab 210t may be formed by extending a foil of an electrode sheet included in the electrode assembly 200. In addition, the electrode leads 210 and 220 can be located respectively in the sealing part 300S in a state of being covered with a lead film 350 so as to secure a sealing property and an insulation property.

The cell case 300 is composed of a laminate sheet, and may include a resin layer for heat fusion and a metal layer for preventing material penetration. The cell case 300 may include an upper case 310 and a lower case 320.

Concave-shaped receiving parts 300ST on which the electrode assembly 200 can be seated may be formed in each of the upper case 310 and the lower case 320. Sealing parts 300S1 and 300S2 can be provided along the outer periphery of the receiving parts 300ST of the upper case 310 and the lower case 320, respectively. The sealing part 300S1 of the upper case 310 and the sealing part 300S2 of the lower case 320 can be heat-fused to each other to form a sealing part and seal the cell case 300.

In another embodiment of the present disclosure, one side of the upper case and one side of the lower case can be integrally connected to each other, and the remaining three sides can be heat-fused. Further, the receiving part 300ST may be formed only in any one of the upper case 310 and the lower case 320, and the other case may have a planar shape.

The cell case 300 described above can include a resin layer, a metal layer, a packaging sheet layer or the like to protect the pouch-type secondary battery. For this purpose, a process of forming a pouch film is required.

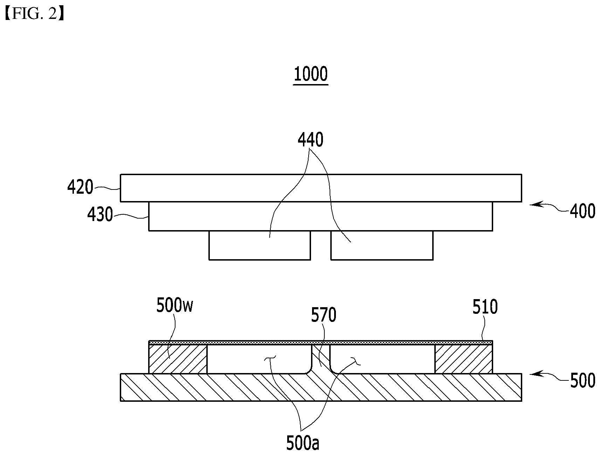

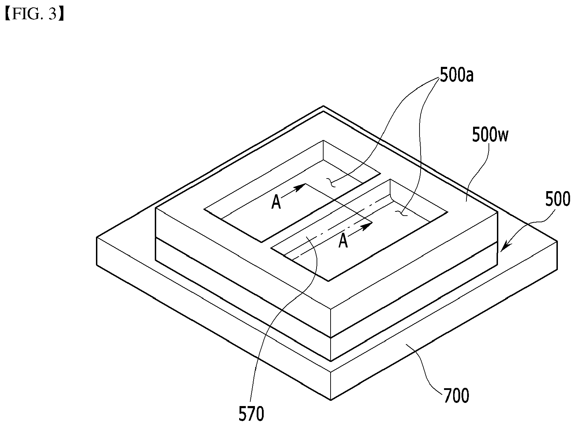

Fig. 2 is a view showing a pouch forming apparatus according to an embodiment of the present disclosure. Fig. 3 is a perspective view showing a die unit before movement of the pressing unit of the pouch forming apparatus of Fig. 2.

Referring to Figs. 2 and 3, the pouch forming apparatus 1000 according to the present embodiment includes a die unit 500 in which a forming groove is formed in a portion where a pouch film 510 is disposed, a partition plate 570 that divides the forming groove 500a into at least two, and a pressing unit 400 that presses the pouch film 510 disposed on the die unit 500 to form an electrode assembly-receiving part. At this time, the partition plate 570 is connected to both wall surfaces 500w of the forming groove 500a corresponding to each other, and can divide the forming groove 500a into two. The die unit 500 according to the present embodiment may be disposed on the base plate 700.

In the die unit 500, when both surfaces of the pouch film 510 are pressed so as to be formed into the forming groove 500a based on the partition plate 570, a pair of electrode assembly-receiving parts can be formed based on the center of the pouch film 510 in which the partition plate 570 is located.

The pressing unit 400 is for pressing the pouch film 510 located in the forming groove 500a to form an electrode assembly-receiving part, and is provided on the die unit 500. The pressing unit 400 includes a moving part 420 provided so as to be able to descend toward the die unit 500, a stripper 430 provided at the lower part of the moving part 420, and a pressing part 440 provided at the lower part of the stripper 430.

When the pouch film 510 is seated on the upper surface of the die unit 500, the stripper 430 according to this embodiment is lowered down, and when the lower surface of the stripper 430 comes into contact with the upper surface of the pouch film 510, the stripper 430 and the die unit 500 can abut on each other, with the pouch film 510 being interposed therebetween. At this time, the stripper 430 can press the pouch film 510 from above to fix it, and when forming the electrode assembly-receiving part by uniformly pressing the pouch film 510, the stretching force applied to the pouch film 510 can be uniformly distributed.

The pressing part 440 according to the present embodiment can be inserted into the forming groove 500a in a state where the pouch film 510 located in the forming groove 500a is pressed, and the electrode assembly-receiving part can be formed on the pouch film 510.

The pressing part 440 is provided on both sides of the lower part of the moving part 420 based on the partition plate 570, respectively, whereby electrode assembly-receiving parts may be respectively formed on both sides of the pouch film 510 based on the partition plate 570.

At this time, the pressing force by the pressing unit 400 is transmitted to the partition plate 570 via the pouch film 510, and thus the partition plate 570 may be damaged or deformed.

Hereinafter, a method for preventing damage of the partition plate 570 and increasing the efficiency of pouch forming according to an embodiment of the present disclosure will be described in comparison with a comparative example.

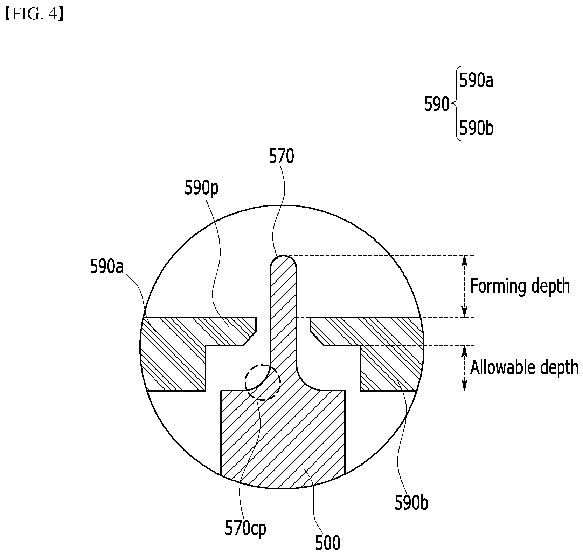

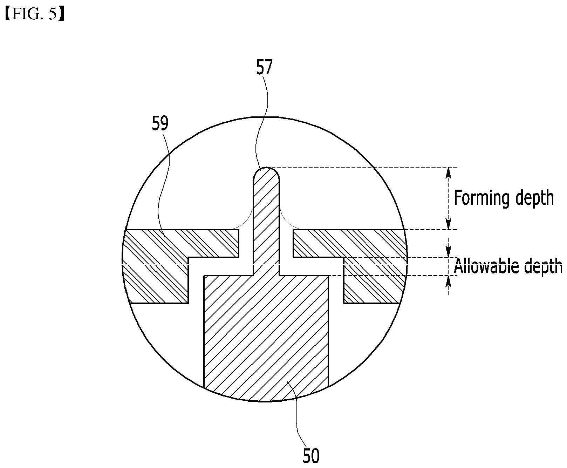

Fig. 4 is a partial cross-sectional view taken along the line A-A of Fig. 3. Fig. 5 is a partial cross-sectional view according to the comparative example.

Referring to Fig. 4, a chamfer part 570cp is formed at the lower end part of the partition plate 570 according to the present embodiment. The chamfer part 570cp may have a shape in which a corner part is made not rectangular but chamfered. The lower end part of the partition plate 570 is connected to the die unit 500, and the chamfer part 570cp may be formed at a portion where the die unit 500 and the partition plate 570 are connected. At this time, the partition plate 570 and the die unit 500 can be integrally formed.

According to the present embodiment, since the chamfer part 570cp is formed at the lower end part of the partition plate 570, it is possible to reduce the risk of cracks occurring in the partition plate 570 by the pressing force of the peripheral parts of the partition plate 570, as in the pressing part 440 of Fig. 2.

Referring to Figs. 2 and 4, the pouch forming apparatus 1000 according to the present embodiment may further include a blank holder 590 located between the pressing unit 400 and the die unit 500. The blank holder 590 may be a portion abutting on the pressing part 440, and when the electrode assembly-receiving part of the pouch film 510 is formed by the pressing part 440, it is possible to prevent wrinkles from occurring at the corners of the receiving part.

The blank holder 590 according to the present embodiment may include a protrusion part 590p abutting on a connecting part between the partition plate 570 and the die unit 500. At this time, the end part of the protrusion part 590p of the blank holder 590 may have a structure inclined so as to correspond to the chamfer part 570cp formed at the lower end part of the partition plate 570. Due to the inclined structure of the blank holder 590, and the chamfer part 570cp of the lower end part of the partition plate 570 abutting thereon, it is possible to minimize the area of the portions that abut on each other during pressing, and to minimize the risk of cracks occurring due to peripheral parts when the partition plate 570 shakes. According to the comparative example of Fig. 5, since the connecting part between the partition plate 57 and the die unit 50 connected at the lower end part of the partition plate 57 has a right-angled structure, the impact load generated by abutting to the blank holder 59 is large, and thus there is a fear that the pouch forming apparatus may be damaged.

In addition, due to the chamfer part 570 cp and the inclined structure of the protrusion part 590p of the blank holder 590, the allowable depth for sufficiently securing the forming depth is larger than that in the comparative example of Fig. 5. According to the present embodiment, it is possible to stably secure an actual forming depth by additionally securing an allowable depth for pouch forming. The expected forming depth may be not formed by the material properties of the pouch film and the equipment of the pouch forming apparatus, and thus the lower end of the equipment can be raised via a sub-motor, and cracks may occur in the equipment due to the impact generated at this time. Therefore, according to the present embodiment, if an allowable depth for pouch forming is additionally secured, the impact can be alleviated.

The blank holder 590 according to the present embodiment may include a first blank holder 590a and a second blank holder 590b respectively formed on the left and right sides of the lower end part of the partition plate 570. The chamfer part 570cp of the partition plate 570 may include a first chamfer part abutting on the first blank holder 590a and a second chamfer part abutting on the second blank holder 590b.

Although the invention has been shown and described above with reference to the preferred embodiments, the scope of the present disclosure is not limited thereto, and numerous other modifications and improvements devised by those skilled in the art using the basic principles of the invention described in the appended claims will fall within the spirit and scope of the present disclosure.

### [Description of Reference Numerals]

400: pressing unit
440: pressing part
500: die unit
500a: forming groove
510: pouch film
570: partition plate
570cp: chamfer part
590: blank holder

## Claims

1. A pouch forming apparatus comprising:
a die unit in which a forming groove is formed in a portion where a pouch film is disposed,
a partition plate that divides the forming groove into at least two, and
a pressing unit that presses the pouch film disposed on the die unit to form an electrode assembly-receiving part,
wherein a chamfer part is formed at the lower end part of the partition plate.

2. The pouch forming apparatus according to claim 1, wherein:
the lower end part of the partition plate is connected to the die unit, and the chamfer part is formed at a portion where the die unit and the partition plate are connected.

3. The pouch forming apparatus according to claim 2, wherein:
the partition plate and the die unit are integrally formed.

4. The pouch forming apparatus according to claim 1, wherein:
the partition plate is connected to both wall surfaces of the forming groove.

5. The pouch forming apparatus according to claim 1,
the pouch forming apparatus further comprises a blank holder located between the pressing unit and the die unit.

6. The pouch forming apparatus according to claim 5, wherein:
the blank holder fixes the pouch film to the upper end part of the die unit.

7. The pouch forming apparatus according to claim 6, wherein:
the blank holder comprises a protrusion part that abuts on a connecting part between the partition plate and the die unit.

8. The pouch forming apparatus according to claim 7, wherein:
an end part of the protrusion part of the blank holder has a structure inclined so as to correspond to the chamfer part formed at the lower end part of the partition plate.

9. The pouch forming apparatus according to claim 8, wherein:
the blank holder comprises a first blank holder and a second blank holder formed on the left side and the right side of the lower end part of the partition plate, respectively.

10. The pouch forming apparatus according to claim 9, wherein:
the chamfer part of the partition plate comprises a first chamfer part that abuts on the first blank holder and a second chamfer part that abuts on the second blank holder.
